# EUROPEAN PATENT APPLICATION

(11) **EP 4 635 914 A1**
(43) Date of publication of application: **22.10.2025**
(21) Application number: 23904038.9
(22) Date of filing: 14.12.2023
(51) Int. Cl.: C01D 15/04, C01D 3/04, H01M 10/54

(54) **APPARATUS FOR PREPARING LITHIUM CHLORIDE, AND METHOD FOR PREPARING SAME**

(30) Priority: 16.12.2022 KR 20220177584
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: JUNG, Eun Jin, Pohang-si, Gyeongsangbuk-do 37834 (KR)
(74) Representative: Pfenning, Meinig & Partner mbB
(86) International application number: PCT/KR2023/020697
(87) International publication number: WO 2024/128839

(57) **Abstract**

The present invention relates to an apparatus for producing lithium chloride and a method of producing the same. The apparatus for producing lithium chloride comprises: a hopper for supplying a lithium compound and a reducing agent; a selective chlorinator connected to a lower portion of the hopper, to which a chloride is supplied and which induces a chlorination reaction; and an extractor connected to the selective chlorinator and configured to extract lithium chloride generated by the chlorination reaction. The amount of residual Li in the lithium compound may satisfy 15 wt% or less, based on weight.

## Description

### FIELD OF THE INVENTION

The present invention relates to a method for recovering lithium, and more particularly, to an apparatus for producing lithium chloride by selectively recovering lithium from a lithium compound, and a method for producing the same.

### DESCRIPTION OF THE RELATED ART

In the conventional method for extracting lithium from lithium ores, lithium carbonate (Li₂CO₃) is produced by subjecting spodumene to oxidative calcination followed by sulfuric acid leaching, neutralization, purification, and evaporation concentration processes.
Specifically, in the conventional lithium extraction process, spodumene ore is calcined at a predetermined temperature to induce a phase transition from α-spodumene to β-spodumene, thereby activating the reactivity of the raw material. The calcined product is then milled and reacted with sulfuric acid to form lithium sulfate.

Subsequently, through sulphidizing and carbonation processes, the lithium is refined to high purity and converted into lithium carbonate.
Through this approach, lithium compounds such as lithium aluminate (LiAlO₂), which appear as intermediates during pre-treatment and thermal processing of lithium battery materials, can be utilized.

Lithium aluminate is gaining attention as a raw material for products used in various fields, such as cement and thermal insulation materials.
By utilizing lithium aluminate, it is possible to selectively produce high-purity lithium chloride (LiCl), and simultaneously discharge high-purity aluminum oxide (Al₂O₃), which remains as a solid oxide by-product, for use in various applications. Interest in such processes is increasing.

### TECHNICAL PROBLEM

The technical problem to be solved by the present invention is to provide an apparatus for producing lithium chloride, which enables the recovery of lithium from a lithium compound while producing high-purity lithium chloride and high-purity solid by-products in a dry state.

Another technical problem to be solved by the present invention is to provide a method for producing lithium chloride for lithium recovery that exhibits the above-mentioned advantages.

### TECHNICAL SOLUTION

According to one embodiment of the present invention, an apparatus for producing lithium chloride comprises: a hopper for supplying a lithium compound and a reducing agent; a selective chlorinator connected to a lower portion of the hopper, to which a chloride is supplied and which induces a chlorination reaction; and an extractor connected to the selective chlorinator and configured to extract lithium chloride generated by the chlorination reaction,
wherein the amount of residual Li in the lithium compound may satisfy 15 wt% or less based on weight.

In one embodiment, the amount of residual Al in the lithium compound may satisfy 40 wt% or more based on weight.

In one embodiment, the molar ratio of the reducing agent to the lithium compound may be from 0.5 to 2.0.

In one embodiment, the apparatus may further comprise a collector (cyclone) connected to an upper portion of the selective chlorinator and configured to collect by-products other than the lithium chloride generated by the chlorination reaction.

In one embodiment, the lithium compound may be LiAlO₂.

In one embodiment, the lithium compound may be recovered from a waste battery.

According to another embodiment of the present invention, a method for producing lithium chloride comprises a method of selectively extracting Li from a lithium compound, the method comprising:
supplying a lithium compound, a reducing agent, and a chloride to a reactor to perform a chlorination reaction; and
extracting lithium chloride (LiCl) generated by the chlorination reaction,
wherein the amount of residual Li in the lithium compound may satisfy 15 wt% or less based on weight.

In one embodiment, the molar ratio of the reducing agent to the lithium compound may be from 0.5 to 2.0.

In one embodiment, the lithium compound may be LiAlO₂.

In one embodiment, the method may further comprise a step of separating oxide by-products from the reactor.

In one embodiment, the step of extracting lithium chloride (LiCl) generated by the chlorination reaction may include extracting the vaporized chloride when the temperature of the reactor is 1,500°C or higher.

In one embodiment, the step of extracting lithium chloride (LiCl) generated by the chlorination reaction may include extracting the chloride by washing and leaching when the temperature of the reactor is below 1,500°C.

In one embodiment, the reducing agent may be coke or CO.

In one embodiment, in the step of supplying a lithium compound, a reducing agent, and a chloride to a reactor to perform the chlorination reaction, when the chloride is in a gaseous state, the flow rate of the chloride may be from 100 to 5,000 ml/min.

In one embodiment, the lithium chloride may be included in a liquid, solid, or gaseous state.

In one embodiment, the chloride may comprise at least one chloride selected from Cl₂ gas, CaCl₂, FeCl₃, MgCl₂, NaCl, KCl, CuCl₂, AlCl₃, and MnCl₂.

In one embodiment, the crystal structure of the lithium compound during the chlorination reaction may include, in volume %, α-phase: 40% or more, γ-phase: from 10% to 50%, and the remainder being δ-phase.

In one embodiment, the particle size of the lithium compound may be from 10 to 500 µm.

In one embodiment, the lithium compound may be recovered from a waste battery.

In one embodiment, the lithium compound may be obtained through a process comprising: crushing the waste battery; heat-treating the crushed material; and performing magnetic separation.

### ADVANTAGEOUS EFFECTS

According to one embodiment of the present invention, the method for recovering lithium from a lithium compound provides a dry process for producing lithium chloride (LiCl) directly from the lithium compound. Compared to conventional wet processes using sulfuric acid, this method enables the production of high-purity lithium chloride from ore without requiring pretreatment, and also allows for the generation of high-purity solid by-products in a dry state.

### BRIEF DESCRIPTION OF THE DRAWINGS

FIG. 1 illustrates an apparatus for producing lithium chloride according to one embodiment of the present invention.
FIG. 2 is a graph showing the selective chlorination reaction process of Li in LiAlO₂ upon introduction of Cl₂, according to one embodiment of the present invention.
FIG. 3 is a graph showing the selective chlorination reaction process of Li in LiAlO₂ upon introduction of FeCl₃, according to one embodiment of the present invention.

### DETAILED DESCRIPTION OF THE EMBODIMENTS

The terms such as "first," "second," and "third," etc., are used to describe various elements, components, regions, layers, and/or sections, but are not limited thereto. These terms are merely used to distinguish one element, component, region, layer, or section from another. Therefore, the "first" element, component, region, layer, or section described hereinafter may be referred to as a "second" element, component, region, layer, or section without departing from the scope of the present invention.

The terminology used herein is intended solely to describe specific embodiments and is not intended to limit the scope of the invention. The singular forms used herein also include the plural forms unless the context clearly indicates otherwise. The term "comprise" or "comprising" as used in this specification is intended to specify the presence of stated features, regions, integers, steps, operations, elements, and/or components, but does not preclude the presence or addition of one or more other features, regions, integers, steps, operations, elements, and/or components.

When a certain portion is referred to as being "on" or "above" another portion, it may be directly on or above the other portion, or one or more intermediate portions may be interposed therebetween. In contrast, when a portion is referred to as being "directly on" another portion, there is no intervening element.

Unless otherwise defined, all technical and scientific terms used herein have the same meanings as commonly understood by one of ordinary skill in the art to which the present invention belongs. Terms generally defined in standard dictionaries should be interpreted as having a meaning consistent with their usage in the relevant technical field and the present disclosure, and should not be interpreted in an idealized or overly formal sense unless otherwise specifically defined. Additionally, unless otherwise specified, "%" refers to weight percent, and 1 ppm corresponds to 0.0001 weight percent.

Hereinafter, embodiments of the present invention will be described in detail so that those of ordinary skill in the art may readily carry out the invention. However, the present invention may be embodied in various different forms and is not limited to the embodiments set forth herein.

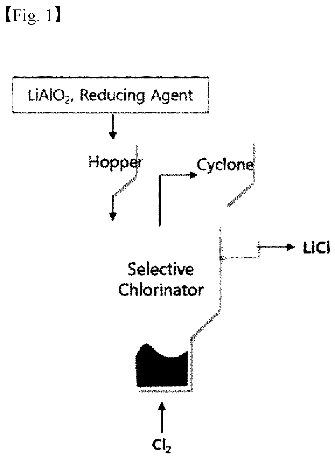

FIG. 1 illustrates an apparatus for producing lithium chloride according to one embodiment of the present invention.

Referring to FIG. 1, the apparatus for producing lithium chloride is configured to selectively recover lithium from a lithium compound and includes a hopper, a selective chlorinator, and an extractor.

The hopper may be a component configured to supply a lithium compound and a reducing agent. The lithium compound may be recovered from waste batteries, such as spent batteries obtained from electric devices that use lithium-ion batteries, for example, electric vehicles. Specifically, the recovered material may include process scrap generated during battery recycling, such as spent batteries, cathode scrap, or bi-cell scrap.

In one embodiment, the lithium compound may be obtained through a process comprising: crushing the waste batteries; heat-treating the crushed waste batteries; and performing magnetic separation on the heat-treated material. The lithium compound may be the non-magnetic residue remaining after magnetic separation. The crushing step may be performed using a crushing device such as a shredder, as a non-limiting example.

The heat treatment step may include conducting a reduction reaction of the crushed battery fragments. The temperature range of the heat treatment may encompass all temperature conditions suitable for initiating a reduction reaction of the battery fragments. The magnetic separation process may be a step of separating magnetic materials, such as NCM alloy, using magnetic force. The remaining residue after removing the magnetic material may be a non-magnetic material, such as an oxide, and may be the lithium compound of the present invention.

The lithium compound may be a compound containing lithium. Specifically, the lithium-containing compound may include, for example, LiAlO₂, spodumene, or black mass recovered from waste batteries. More specifically, the lithium compound may be LiAlO₂. The lithium compound may serve as a raw material targeted for selective lithium recovery.

In one embodiment, the average particle size of the lithium compound may range from 10 to 500 µm. More specifically, the average particle size may range from 30 to 100 µm.
If the upper limit of the particle size is exceeded, the efficiency of the chlorination reaction may deteriorate. If the lower limit is exceeded, powder scattering during the chlorination reaction may reduce the lithium recovery rate.

The reducing agent may be a carbon-based reducing agent. It may function to promote the reduction of the lithium compound. The reducing agent may be, for example, coke or CO.
The reducing agent may also serve to accelerate the reaction rate between the lithium compound and the chloride described below. In one embodiment, the average particle size of the reducing agent may range from 10 to 500 µm. More specifically, the average particle size may range from 30 to 200 µm.

If the particle size exceeds the upper limit, the chlorination reaction may not proceed efficiently. If the lower limit is exceeded, a slugging phenomenon may occur, hindering the chlorination reaction.

In one embodiment, the lithium compound and the reducing agent may be mixed at a predetermined ratio. The molar ratio of the reducing agent to the lithium compound may range from 0.5 to 2.0. More specifically, the molar ratio may range from 0.6 to 1.2.

If the molar ratio exceeds the upper limit, issues such as reduced economic efficiency and contamination with impurities may occur. If the molar ratio falls below the lower limit, the reaction may not proceed effectively.

The selective chlorinator may be connected to the lower part of the hopper and configured to induce a chlorination reaction by supplying a chloride. The chloride may be in a solid or gaseous state and may include, for example, at least one chloride selected from Cl₂ gas, CaCl₂, FeCl₃, MgCl₂, NaCl, KCl, CuCl₂, AlCl₃, and MnCl₂.

In one embodiment, when the chloride is a gas, its flow rate may vary depending on the scale of the applied equipment but may be, for example, from 100 to 5,000 ml/min. More specifically, the flow rate may be from 200 to 500 ml/min.

When the flow rate is within this range, the chlorination reaction can proceed sufficiently. If the flow rate exceeds the upper limit, elutriation may occur, leading to reduced reaction efficiency.

In one embodiment, the chlorination reaction may be carried out at a pressure range of 0.1 to 1.5 atm. More specifically, the pressure may be in the range of 0.3 to 1.3 atm. Within this pressure range, the chlorination reaction can be effectively performed.

In one embodiment, the chlorination reaction may be conducted for a duration of 5 minutes to 2 hours. Conducting the chlorination reaction for the aforementioned duration allows for efficient extraction of residual lithium from the lithium compound.

In one embodiment, the chlorination reaction may follow Reaction Scheme 1 or Reaction Scheme 2, depending on the type of reducing agent used:

[Reaction Scheme 1] 2LiAlO₂ + C + Cl₂(g) → 2LiCl + Al₂O₃ + CO(g)

[Reaction Scheme 2] 2LiAlO₂ + CO(g) + Cl₂(g) → 2LiCl + Al₂O₃ + CO₂(g)

According to Reaction Schemes 1 and 2, when the reducing agent is carbon (e.g., coke) or carbon monoxide (CO) gas, it reacts with the lithium compound LiAlO₂ to produce lithium chloride and aluminum oxide as a by-product.

The extractor is connected to the selective chlorinator and may extract lithium chloride generated by the chlorination reaction. The extractor may recover lithium chloride produced from the reaction between the lithium compound and the chloride, as illustrated in Reaction Scheme 1 or 2.

In one embodiment, the extracted lithium chloride may be in a liquid, solid, or gaseous state. Specifically, when the chloride is in a gaseous state, lithium chloride may be recovered as a gas.

In another embodiment, when the chloride is in a liquid or solid state, the lithium chloride may be extracted in liquid form. For example, various leaching methods, including water washing, may be employed to extract lithium chloride.

In one embodiment, the chlorination reaction may be conducted at a temperature range of 300°C to 1,600°C. In one embodiment, when the reaction is conducted at a temperature above 1,500°C, the generated lithium chloride may be recovered in gaseous form.

In another embodiment, when the reaction temperature is below 1,500°C, the lithium chloride may be recovered in liquid or solid form.

In one embodiment, the apparatus may further comprise a cyclone collector connected to the upper portion of the selective chlorinator to collect by-products generated in addition to lithium chloride.

The chlorination reaction may produce by-products such as metal oxides, for example, Al₂O₃. Such by-products may be discharged through the collector and used as raw materials for various applications, including cement or thermal insulation materials.

In one embodiment, when the chlorination reaction is conducted at a temperature above 1,500°C, the process may include a sublimation step for vaporized chlorides.

This sublimation step may include cooling the gaseous chlorides to a temperature ranging from 10°C to 700°C, more specifically from 20°C to 550°C, and even more specifically from 20°C to 300°C.

When cooled within this range, the gaseous chlorides may be converted into a solid form, thereby facilitating their collection.

In one embodiment, when the chlorination reaction is performed at a temperature below 1,500°C, liquid or solid lithium chloride may be extracted without a separate sublimation step through a leaching method such as water washing.

In this temperature range, the reaction may be carried out without the need for additional temperature control, offering operational advantages.

In one embodiment, the amount of residual Li in the lithium compound may satisfy 15 wt% or less. Specifically, the residual Li content may be 11.3 wt% or less.

The amount of residual Li refers to the lithium content remaining in the unreacted material after the lithium compound is subjected to the chlorination reaction.

As the residual Li content falls within the aforementioned range, it can be confirmed that most of the lithium in the raw lithium compound has been converted into lithium chloride.

If the residual Li content exceeds this range, the lithium chloride yield may be insufficient.

In one embodiment, the amount of residual Al in the lithium compound may satisfy 40 wt% or more, and specifically 70 wt% or more. More specifically, the residual Al content may be 72.0 wt% or less.

The amount of residual Al refers to the aluminum content remaining in the unreacted material after the chlorination reaction.

When the residual Al content falls within the above range, it indicates that most of the lithium has been chlorinated, and the aluminum is separated and discharged in the form of aluminum oxide, allowing for the production of high-purity lithium chloride.

If the residual Al content falls outside this range, aluminum may react with lithium and chlorine to form impurities, resulting in decreased lithium chloride yield.

In one embodiment, the crystal structure of the lithium compound during the chlorination reaction may include, in volume %, an α-phase of 40% or more, a γ-phase of 10 to 50%, and the remainder as δ-phase.

The α, γ, and δ phases may result from thermal treatment conditions applied to the lithium compound.

When the α, γ, and δ phases are within the above-specified ranges, the chlorination reaction is facilitated.

If these phase proportions deviate from the specified ranges, the reaction efficiency and chlorination rate may deteriorate.

According to another embodiment of the present invention, a method for producing lithium chloride comprises a method of selectively extracting Li from a lithium compound, and includes:
supplying a lithium compound, a reducing agent, and a chloride to a reactor to perform a chlorination reaction; and extracting lithium chloride (LiCl) generated by the chlorination reaction.

Details regarding the lithium compound, reducing agent, and chloride may be referenced in FIG. 1, as described above.

In the chlorination step, the lithium compound and reducing agent supplied from the hopper react with the chloride supplied to the lower portion of the selective chlorinator, where the reaction takes place.

Additional descriptions of the chlorination reaction may be referenced in FIG. 1 to the extent not inconsistent.

The step of extracting lithium chloride (LiCl) generated by the chlorination reaction may include recovery of lithium chloride in gas, liquid, or solid form.

If the lithium chloride is in gaseous form, it may be extracted through the extractor. Within the extractor, the gaseous lithium chloride may undergo a sublimation step, as previously described.

In another embodiment, if the lithium chloride is in liquid or solid form, it may be extracted via leaching without a separate sublimation step-for example, by water washing, as described above.

In one embodiment, the method for producing lithium chloride may further comprise a step of separating oxide by-products from the reactor. The by-product may be a metal oxide, such as Al₂O₃. Details regarding this step may also be referenced in the preceding description.

The following section provides specific examples of the present invention. However, these examples are merely exemplary embodiments and should not be construed as limiting the scope of the present invention.

### Experimental Example

Lithium aluminate (LiAlO₂) as the lithium compound and a reducing agent were introduced into a hopper and supplied to a selective chlorinator. Chlorine gas was introduced from the lower part of the chlorinator to perform a chlorination reaction for 30 minutes.

Specifically, when the reducing agent was carbon (C), the reaction followed the following equation (Reaction 1); when the reducing agent was carbon monoxide (CO), the reaction followed Reaction 2:

[Reaction 1] 2LiAlO₂ + C + Cl₂(g) → 2LiCl + Al₂O₃ + CO(g)

[Reaction 2] 2LiAlO₂ + CO(g) + Cl₂(g) → 2LiCl + Al₂O₃ + CO₂(g)

More specifically, the lithium compound and the reducing agent were mixed in the hopper and injected into the upper portion of the reactor. The particle size of LiAlO₂ was 75 µm, and that of the reducing agent was 150 µm. Subsequently, lithium chloride (LiCl) gas was generated.

The gaseous lithium chloride was cooled to 25°C using a condenser, and solid-phase LiCl was obtained. The by-product Al₂O₃ was discharged through a cyclone as a solid by-product.

### [Experimental Example 1]

Reducing agent: Coke
Molar ratio of lithium compound to reducing agent: 1:0.7
Chlorinating agent: FeCl₃
FeCl₃ flow rate: 250 ml/min
Reaction temperature: 1,100°C

### [Experimental Example 2]

Reducing agent: Coke
Molar ratio of lithium compound to reducing agent: 1:0.7
Chlorinating agent: FeCl₃
FeCl₃ flow rate: 250 ml/min
Reaction temperature: 900°C

### [Experimental Example 3]

Reducing agent: Coke
Molar ratio of lithium compound to reducing agent: 1:0.7
Chlorinating agent: FeCl₃
FeCl₃ flow rate: 250 ml/min
Reaction temperature: 700°C

### [Experimental Example 4]

Reducing agent: Coke
Molar ratio of lithium compound to reducing agent: 1:0.7
Chlorinating agent: FeCl₃
FeCl₃ flow rate: 250 ml/min
Reaction temperature: 500°C

### [Experimental Example 5]

Reducing agent: Coke
Molar ratio of lithium compound to reducing agent: 1:0.7
Chlorine gas flow rate: 300 ml/min
Reaction temperature: 900°C

### [Experimental Example 6]

Reducing agent: Coke
Molar ratio of lithium compound to reducing agent: 1:0.7
Chlorine gas flow rate: 300 ml/min
Reaction temperature: 1,000°C

### [Experimental Example 7]

Reducing agent: Coke
Molar ratio of lithium compound to reducing agent: 1:0.7
Chlorine gas flow rate: 300 ml/min
Reaction temperature: 700°C

### [Experimental Example 8]

Reducing agent: CO gas
Flow ratio of chlorine gas to CO gas: 1: 1
Chlorine gas flow rate: 150 ml/min
Reaction temperature: 900°C

### [Experimental Example 9]

Reducing agent: CO gas
Molar ratio of lithium compound to reducing agent: 1:1
Flow ratio of chlorine gas to CO gas: 1: 1
Chlorine gas flow rate: 150 ml/min
Reaction temperature: 900°C

Table 1 below summarizes the detailed conditions of the above experimental examples and the measured amounts of residual elements. The residual content of elements in the lithium compound is expressed as weight percent (wt%) of residual lithium and aluminum based on the initial lithium compound.

**[Table 1]**

| | Time (min) | LiAlO₂ : Reducing Agent | Reducing Agent | Chlorinati ng Agent | Gas flow rate [ml/min] | Temp. [°C] | Residual component in Lithium compound (compared to initial amount, %) | | Category |
|---|---|---|---|---|---|---|---|---|---|
| | | | | | | | Li [wt%] | Al [wt%] | |
| Experiment al Example 1 | 30 | 1 : 0.7 | coke | FeCl₃ | N₂:250 | 1100 | 3.2 | 92.1 | Example |
| Experiment al Example 2 | 30 | 1 : 0.7 | coke | FeCl₃ | N₂:250 | 900 | 3.1 | 96.3 | Example |
| Experiment al Example 3 | 30 | 1 : 0.7 | Coke | FeCl₃ | N₂:250 | 700 | 4.2 | 98.0 | Example |
| Experiment al Example 4 | 30 | 1 : 0.7 | CO(gas) | FeCl₃ | N₂:250 | 500 | 11.3 | 99.2 | Example |
| Experiment al Example 5 | 30 | 1 : 0.7 | Coke | Cl₂ | Cl₂:300 | 900 | 2.8 | 80.2 | Example |
| Experiment al Example 6 | 30 | 1 : 0.7 | Coke | Cl₂ | Cl₂:300 | 1000 | 2.4 | 72.0 | Example |
| Experimental Example 7 | 30 | 1 : 0.7 | Coke | Cl₂ | Cl₂:300 | 700 | 1.6 | 86.7 | Example |
| Experiment al Example 8 | 30 | 1 : 0.7 | CO(gas) | Cl₂ | CO/Cl₂ mix:300 | 900 | 2.6 | 82.5 | Example |
| Experiment al Example 9 | 30 | 1 : 1 | CO(gas) | Cl₂ | CO/Cl₂ mix:300 | 900 | 3.2 | 83.6 | Example |
| Experiment al Example 10 | 30 | 1 (spodumene, LiAlSi₂O₆):0.7 | Coke | Cl₂ | Cl₂:300 | 900 | 22.7 | 72.8 | Comparative Example |

Referring to Table 1, it can be confirmed from Experimental Examples 1 to 9 that the amount of residual elements in the lithium compound-specifically, residual lithium-is 15 wt% or less relative to the initial lithium compound, and residual aluminum is 70 wt% or more by weight.

This confirms that lithium chloride was properly formed, resulting in the production of high-purity lithium chloride.

In contrast, in Experimental Example 10, the residual lithium content remained at 22.7 wt%, indicating incomplete reaction and clearly different effectiveness compared to Experimental Examples 1 to 9.

Furthermore, it was confirmed that aluminum also underwent chlorination and became mixed with lithium chloride, making it difficult to produce high-purity lithium chloride under those conditions.

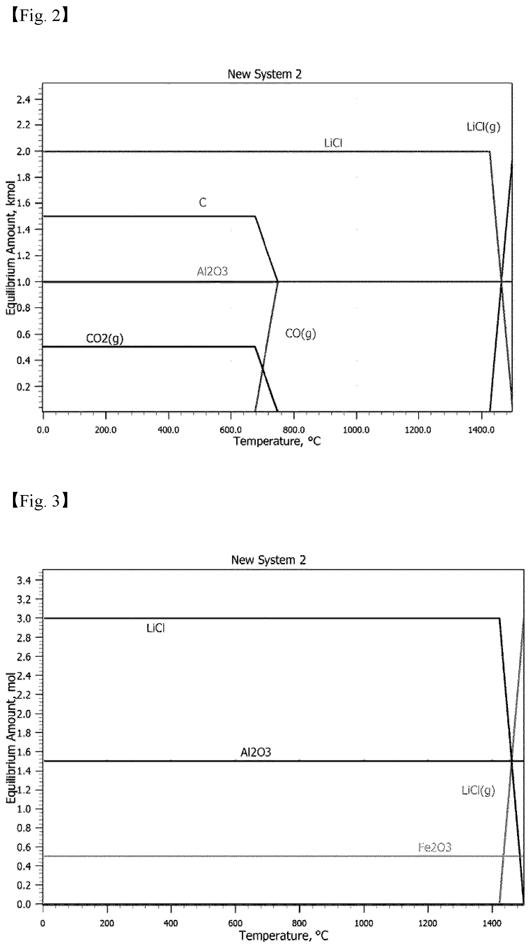

FIG. 2 is a graph illustrating the selective chlorination reaction process of lithium in LiAlO₂ upon the introduction of Cl₂, according to one embodiment of the present invention.

Referring to FIG. 2, it shows a reaction equilibrium diagram when carbon (C) and chlorine gas (Cl₂) are introduced together with LiAlO₂.

This equilibrium diagram demonstrates that LiCl is formed via the input reaction. In implementing the process, it is critical to precisely control the amount of Cl₂ gas introduced in order to ensure the selective formation of LiCl.

If Cl₂ is introduced in excess, AlCl₃ may also be formed, leading to contamination with other chlorides.

When the reaction temperature exceeds 1,400°C and LiCl is vaporized, the lithium chloride may be recovered in the form of chloride fume. Under such conditions, LiCl can be captured in a condenser for recovery.

In contrast, if the reaction is carried out at a temperature below 1,400°C, LiCl may be collected in solid form and recovered via leaching.

FIG. 3 is a graph illustrating the selective chlorination reaction process of lithium in LiAlO₂ upon the introduction of FeCl₃, according to one embodiment of the present invention.

Referring to FIG. 3, it can be confirmed that FeCl₃ allows more precise control of the input amount compared to Cl₂ gas and enables the selective formation of LiCl.

The present invention is not limited to the embodiments and/or examples described above but may be implemented in various other forms.

It will be apparent to those skilled in the art that various modifications can be made without departing from the technical spirit or essential characteristics of the invention.

Therefore, the above embodiments and/or examples should be understood as illustrative and not restrictive in all aspects.

## Claims

1. An apparatus for producing lithium chloride, comprising:
a hopper for supplying a lithium compound and a reducing agent;
a selective chlorinator connected to a lower part of the hopper and configured to induce a chlorination reaction by supplying a chloride; and
an extractor connected to the selective chlorinator and configured to extract lithium chloride generated by the chlorination reaction,
wherein the amount of residual Li in the lithium compound satisfies 15 wt% or less, based on weight.

2. The apparatus for producing lithium chloride of claim 1,
wherein the amount of residual Al in the lithium compound satisfies 40 wt% or more, based on weight.

3. The apparatus for producing lithium chloride of claim 1,
wherein the molar ratio of the reducing agent to the lithium compound is from 0.5 to 2.0.

4. The apparatus for producing lithium chloride of claim 1,
further comprising a collector (cyclone) connected to an upper portion of the selective chlorinator and configured to collect by-products generated in addition to the lithium chloride by the chlorination reaction.

5. The apparatus for producing lithium chloride of claim 1,
wherein the lithium compound comprises a compound containing lithium.

6. The apparatus for producing lithium chloride of claim 1,
wherein the lithium compound is recovered from a waste battery.

7. A method for producing lithium chloride by selectively extracting Li from a lithium compound, the method comprising:
supplying a lithium compound, a reducing agent, and a chloride to a reactor to perform a chlorination reaction; and
extracting lithium chloride (LiCl) generated by the chlorination reaction,
wherein the amount of residual Li in the lithium compound satisfies 15 wt% or less, based on weight.

8. The method of claim 7,
wherein the molar ratio of the reducing agent to the lithium compound is from 0.5 to 2.0.

9. The method of claim 7,
wherein the lithium compound comprises a compound containing lithium.

10. The method of claim 7,
further comprising a step of separating oxide by-products from the reactor.

11. The method of claim 7,
wherein the step of extracting lithium chloride (LiCl) generated by the chlorination reaction comprises extracting the vaporized chloride when the temperature of the reactor is 1,500°C or higher.

12. The method of claim 7,
wherein the step of extracting lithium chloride (LiCl) generated by the chlorination reaction comprises extracting the chloride by washing and leaching when the temperature of the reactor is below 1,500°C.

13. The method of claim 7,
wherein the reducing agent is coke or CO.

14. The method of claim 7,
wherein, in the step of supplying a lithium compound, a reducing agent, and a chloride to a reactor to perform a chlorination reaction,
when the chloride is a gas, the flow rate of the chloride is from 100 to 5,000 ml/min.

15. The method of claim 7,
wherein the lithium chloride is included in a liquid, solid, or gas state.

16. The method of claim 7,
wherein the chloride is at least one selected from Cl₂ gas, CaCl₂, FeCl₃, MgCl₂, NaCl, KCl, CuCl₂, AlCl₃, and MnCl₂.

17. The method of claim 7,
wherein the crystal structure of the lithium compound in the chlorination reaction includes a γ-phase.

18. The method of claim 7,
wherein the particle size of the lithium compound is from 10 to 500 µm.

19. The method of claim 7,
wherein the lithium compound is recovered from a waste battery.

20. The method of claim 7,
wherein the lithium compound is obtained by:
crushing the waste battery;
heat treating the crushed material; and
performing magnetic separation.
